# EUROPEAN PATENT APPLICATION

(11) **EP 2 549 801 A1**
(43) Date of publication of application: **23.01.2013**
(21) Application number: 12162317.7
(22) Date of filing: 30.03.2012
(51) Int. Cl.: H04W 36/14

(54) **Apparatus and method for providing packet service in a portable terminal**

(30) Priority: 15.07.2011 KR 20110070419
(71) Applicant: Samsung Electronics Co., Ltd., Suwon-si, Gyeonggi-do, 443-742 (KR)
(72) Inventor: Lee, Shin-Duck, 442-742 Gyeonggi-do (KR); Lee, Hyun-Chul, 442-742 Gyeonggi-do (KR)
(74) Representative: Hutter, Jacobus Johannes

(57) **Abstract**

An apparatus and method for providing a packet service in a portable terminal in which a first communication network unit provides the packet service through a first communication network, a second communication network unit provides a circuit service set as a default service and the packet service through a second communication network, and a controller has the capability to switch delivery of the packet service from the first communication network to the second communication network. When it is determined that a data rate of a bandwidth allocated by the first communication network is lower than a maximum data rate supported by the second communication network during the packet service in progress through the first communication network, the controller preferably switches from the first communication network to the second communication network and controls the second communication network unit to perform the packet service.

## Description

### BACKGROUND OF THE INVENTION

### Field of the Invention

The present invention relates to an apparatus and method for providing a packet service in a portable terminal. More particularly, the present invention relates to an apparatus and method for rapidly providing a packet service using two communication networks flexibly in a portable terminal.

### Description of the Related Art

Long Term Evolution (LTE) is a 3.9^{th} generation wireless communication standard that enables communication at a data rate 12 times faster than a 3^{rd} Generation (3G) mobile communication standard. High Speed Packet Access (HSPA) offers a download speed of up to 150Mbps so that a 700-MB movie can be downloaded within one minute, and allows a user to conveniently use all services available in an on-line environment, such as high-definition video downloading, a network game, etc., while in motion, such as in a car, train, bus, etc.

However, LTE supports different data rates ranging from 8.7Mbps to 150Mbps in different bandwidths used. Table 1 below lists maximum data rates in frequency bandwidths used in LTE.

**(Table 1)**

| Bandwidth | Maximum data rate for used downlink frequency bandwidth | | | | | |
|---|---|---|---|---|---|---|
| | 1.4MHz | 3MHz | 5MHz | 10MHz | 15MHz | 20MHz |
| Maximum data rate | 8.7Mbps | 22Mbps | 36Mbps | 73Mbps | 110Mbps | 150Mbps |

Referring to Table 1, if a small bandwidth, for example, 1.4MHz, is allocated for a packet service in an LTE network, a maximum data rate of 8.7Mbps is available. Despite the packet service over the LTE network, it is relatively slow on the part of a user.

Meanwhile, a portable terminal that provides the packet service through the LTE network performs a circuit service using an HSPA+ network by default. The HSPA+ network provides a maximum rate on a category basis (e.g. 21Mbps for Category 14) irrespective of a preserved frequency bandwidth.

Therefore, if the LTE network allocates 1.4MHz, a maximum data rate available in the LTE network is lower than a maximum data rate available in the HSPA+ network (e.g. 21Mbps for Category 14). This implies that a user only receives an inefficient service regarding the actual data rate of LTE, and typically expected a faster packet service in the LTE network, resulting in dissatisfaction with both the equipment and service provider.

### SUMMARY OF THE INVENTION

The present invention provides an apparatus and method for rapidly providing a packet service using two communication networks flexibly in a portable terminal.

An exemplary aspect of the present invention is to provide an apparatus and method for rapidly providing a packet service using a Long Term Evolution (LTE) network and a High Speed Packet Access+ (HSPA+) network flexibly in a portable terminal at a faster rate than known heretofore.

A further exemplary aspect of the present invention is to provide an apparatus and method for rapidly providing the packet service using an HSPA+ network that can afford to offer a larger bandwidth in a portable terminal, when an LTE network allocates a small bandwidth for a packet service.

In accordance with an exemplary embodiment of the present invention, there is provided an apparatus for providing a packet service in a portable terminal, in which a first communication network unit provides the packet service through a first communication network, a second communication network unit provides a circuit service set as a default service and the packet service through a second communication network, and a controller controls the packet service to be provided through the second communication network, when a data rate of a bandwidth allocated by the first communication network is lower than a maximum data rate supported by the second communication network during the packet service in progress (while the packet service is in progress) through the first communication network.

In accordance with another exemplary embodiment of the present invention, there is provided a method for providing a packet service in a portable terminal, in which a data rate of a bandwidth allocated by a first communication network is measured during the packet service in progress through the first communication network, and the packet service is provided through a second communication network that provides a circuit service as a default service, when the data rate of the bandwidth allocated by the first communication network is lower than a maximum data rate supported by the second communication network.

In an exemplary aspect of the invention, the controller switches to the first communication network in order to measure a data rate of a bandwidth allocated by the first communication network during the packet service while in progress through the second communication network at a predetermined period of time subsequent to the controller initially switching operation of the packet service to the second communication network. When the controller determines that the data rate of the bandwidth allocated by the first communication network is lower than the maximum data rate supported by the second communication network via the second communication network unit, the controller switches back to the second communication network and controls the packet service to be performed through the second communication network.

### BRIEF DESCRIPTION OF THE DRAWINGS

The above and other exemplary objects, features and advantages of certain embodiments of the present invention will become more apparent to a person of ordinary skill in the art from the following detailed description taken in conjunction with the accompanying drawings, in which:
FIG. 1 is a block diagram of a portable terminal according to an exemplary embodiment of the present invention; and
FIG. 2 is a flowchart illustrating an exemplary operation for providing a packet service in the portable terminal according to an exemplary embodiment of the present invention.

Throughout the drawings, the same drawing reference numerals will be understood to refer to the same elements, features and structures.

### DETAILED DESCRIPTION

Reference will now be made in detail to the preferred exemplary embodiments of the present invention with reference to the accompanying drawings. For the purposes of clarity and simplicity, a detailed description of well-known functions and structures may be omitted from the description so as not to obscure appreciation of the subject matter of the present invention by a person of ordinary skill in the art.

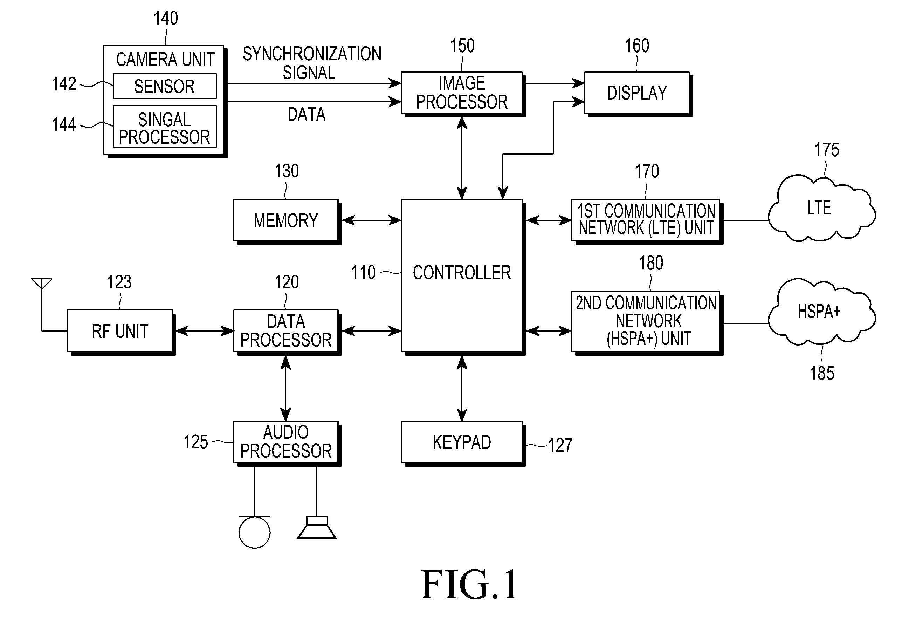

FIG. 1 is a block diagram of a portable terminal according to an exemplary embodiment of the present invention.

Referring now to FIG. 1, a Radio Frequency (RF) unit 123 performs a wireless communication function for the portable terminal. The RF unit 123 preferably includes an RF transmitter for upconverting the frequency of a transmission signal and amplifying the upconverted transmission signal and an RF receiver for low-noise-amplifying a received signal and downconverting the frequency of the low-noise-amplified signal. A data processor 120 includes a transmitter for encoding and modulating the transmission signal and a receiver for demodulating and decoding the received signal. In other words, the data processor 120 may include a MODEM and a CODEC. The CODEC includes a data CODEC for processing packet data and an audio CODEC for processing an audio signal such as voice. An audio processor 125 reproduces a received audio signal output from the audio CODEC of the data processor 120 or transmits a transmission audio signal generated from a microphone to the audio CODEC of the data processor 120.

A keypad 127 is an input unit includes alphanumerical keys for inputting digits and characters and function keys for setting various functions.

A memory 130, which is a non-transitory machine readable medium, may include a program memory and a data memory. The program memory can, for example, store programs required to control typical operations of the portable terminal and a program required for providing a packet service by flexibly using a first communication network (e.g. a Long Term Evolution (LTE) network) and a second communication network (e.g. a High Speed Packet Access + (HSPA+) network).

A controller 110, which comprises a processor or microprocessor, provides overall control of the portable terminal.

In accordance with an exemplary embodiment of the present invention, when a data rate of a bandwidth allocated by the first communication network is lower than a maximum data rate supported by the second communication network during a packet service in progress through a first communication network unit 170, the controller 110 measures the data rate of the bandwidth allocated by the first communication network for a first predetermined measurement time. If the measured data rate is lower than the maximum data rate supported by the second communication network, the controller 110 then switches from the first communication network 170 to the second communication network 180 and controls a second communication network unit 180 to perform the packet service.

In addition, in an exemplary embodiment of the invention the controller 110 switches back to the first communication network after a predetermined period of time during which the packet service is still in progress with the second communication network unit 180 and the controller measures a bandwidth allocated by the first communication network unit.

If the data rate of the allocated bandwidth is still lower than the maximum data rate supported by the second communication network, the controller 110 measures the data rate of the bandwidth allocated by the first communication network for a second predetermined measurement time.

If the measured data rate is still lower than the maximum data rate supported by the second communication network, the controller 110 switches to the second communication network and controls the second communication network unit 180 to perform (or continue performing) the packet service.

In addition, the controller 110 switches to the first communication network at a subsequent predetermined time, and measures the bandwidth allocated by the first communication network. If the data rate of the bandwidth of the first communication network is higher than the maximum data rate supported by the second communication network, the controller 110 controls the first communication network unit 170 to perform the packet service.

According to an exemplary embodiment of the present invention, the controller 110 increases an amount of the predetermined time after which it switches to the first communication network to measure an allocated bandwidth during the packet service in progress through the second communication network by a predetermined value, each time the controller 110 switches operation of the packet service from the second communication network to the first communication network.

With continued reference to FIG. 1, the first communication network unit 170 provides the packet service through the first communication network (175). In an exemplary embodiment of the present invention, the first communication network may comprise an LTE network that provides data rates ranging from 8.7Mbps to 150Mbps according to bandwidth usage.

The second communication network unit 180 provides a circuit service and the packet service through the second communication network 185, serving as a sender and receiver to/from the second communication network (185) and the controller (110). The second communication network may comprise, for example, an HSPA+ network that provides the same maximum data rate for the highest category supported by a portable terminal, irrespective of a frequency bandwidth. In an exemplary embodiment of the present invention, the highest category supported by the portable terminal is 14 and the HSPA+ network provides up to 21Mbps for Category 14, by way of example.

The second communication network is configured to provide a circuit service for a call service by default, and performs a packet service for a data service under the control of the controller 110.

A camera unit 140 includes a camera sensor 142 for capturing an image and converting the captured optical signal into an electrical signal, and a signal processor 144 for converting the analog image signal captured through the camera sensor to digital data. Herein, the camera sensor is assumed to be a Charge Coupled Device (CCD) or Complementary Metal Oxide Semiconductor (CMOS) sensor and the signal processor may be configured into a Digital Signal Processor (DSP). The camera sensor and the signal processor may be incorporated into a single device or separately configured.

An image processor 150 performs Image Signal processing (ISP) to display an image signal received from the camera unit 140 on a display 160. The ISP involves functions such as gamma correction, interpolation, spatial change, image effects, image scaling, Auto White Balance (AWB), Auto Exposure (AE), Auto Focus (AF), etc. Therefore, the image processor 150 preferably processes the image signal received from the camera unit 140 on a frame by frame basis and outputs the frame image data according to the characteristics and size of the display 160. The image processor 150 includes a video CODEC for compressing the frame image data to be displayed on the display 160 in a predetermined scheme or decompressing compressed frame image data to the original frame image data. The video CODEC may comprise a JPEG CODEC, an MPEG4 CODEC, or a Wavelet CODEC. It is assumed herein that the image processor 150 is equipped with an On Screen Display (OSD) function, and the image processor 150 may output OSD data according to the size of a displayed screen under the control of the controller 110.

The display 160 displays the image signal received from the image processor 150 on a screen and also displays user data received from the controller 110. The display 160 may be configured with, for example, a Liquid Crystal Display (LCD), active-matrix organic light-emitting diode (AMOLED), Super AMOLED, etc., or any other type of thin film technology display. In this case, the display 160 may include an LCD controller, a memory for storing image data, and an LCD device. If the LCD is configured into a touch screen, it may serve as an input unit. Thus, the display 160 may display the same keys as those of the keypad 127.

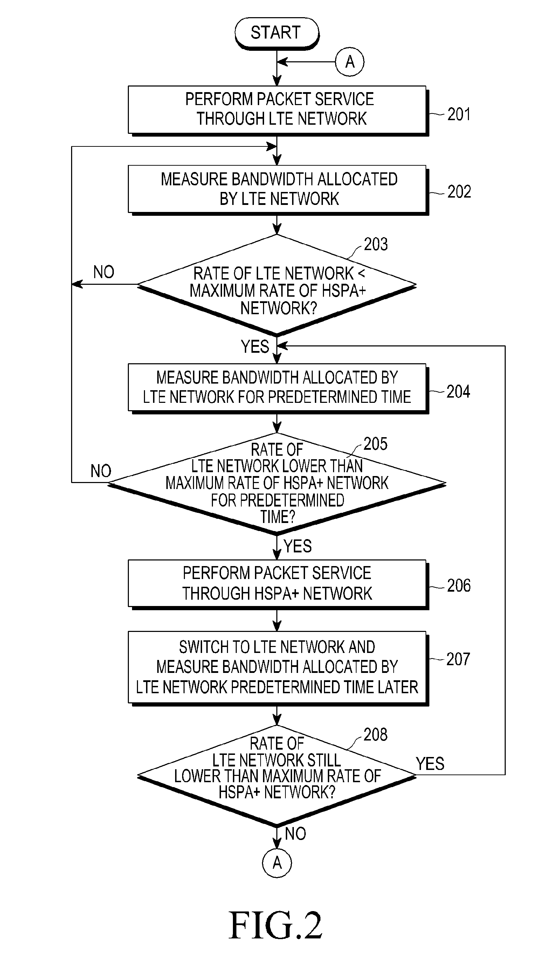

Now a detailed description will be given of an exemplary operation for providing a packet service in the portable terminal with reference to FIG. 2. In accordance with this exemplary embodiment of the present invention, the following description is given with the appreciation that the first and second communication networks comprise an LTE network and an HSPA+ network, respectively.

FIG. 2 is a flowchart illustrating an operation for providing a packet service in the portable terminal according to an exemplary embodiment of the present invention.

Referring now to FIG. 2, at (201) the portable terminal is performing a packet service at a data rate available in a bandwidth allocated by the LTE network through the first communication network unit 170.

At (202), the controller 110 measures the bandwidth allocated by the LTE network.

At (203), if the data rate of the bandwidth allocated by the LTE network is lower than a maximum data rate supported by the HSPA+ network (the second communication network) which is not currently being used, then at (204) the controller 110 measures a bandwidth allocated by the LTE network for a predetermined time.

For example, if the LTE network currently provides a bandwidth of 1.4MHz supporting up to 8.7Mbps, lower than a maximum data rate of 21Mbps supported for a portable terminal with Category 14 by the HSPA+ network in steps 202 and 203, then at (204) the controller 110 determines whether the LTE network continuously provides the 1.4MHz bandwidth for the predetermined time.

If at (205), the data rate (8.7Mbps) of the bandwidth allocated by the LTE network for the predetermined time is still lower than the maximum data rate (21Mbps) supported by the HSPA+ network in step 205, then at (206) the controller 110 switches to the HSPA+ network and controls the second communication network unit 180 to perform the packet service.

At 206, during the packet service in progress through the second communication network unit 180 at the maximum data rate supported by the HSPA+ network in step 206, then the controller 110 switches to the LTE network a predetermined time later and measures a bandwidth allocated by the LTE network through the first communication network unit 170 in step 207.

If at (208), the data rate (8.7Mbps) of the bandwidth allocated by the LTE network is still lower than the maximum data rate (21Mbps) supported by the HSPA+ network, the process returns to (204) so that controller 110 can determine whether a bandwidth allocated by the LTE network still provides a lower data rate than the maximum data rate (21Mbps) supported by the HSPA+ network for the predetermined time.

Through repetition of steps (201) to (208), if the LTE network allocates a large bandwidth, the portable terminal performs the packet service through the LTE network. On the other hand, if the LTE network allocates a lower data rate than the maximum data rate supported by the HSPA+ network by allocating a smaller bandwidth, the portable terminal performs the packet service through the HSPA+ network. In this manner, the packet service can be more rapidly provided to a user.

While repeating steps (201) to (208), the controller 110 increases the predetermined time after which it switches from the HSPA+ network to the LTE network to measure a bandwidth allocated by the LTE network during the packet service in progress through the HSPA+ network in step 207, by a predetermined value each time a switch from the HSPA+ network to the LTE network occurs.

While the portable terminal has been described with reference to FIGs. 1 and 2 as performing the packet service using the LTE network and the HSPA+ network flexibly, it is well-within the spirit and scope of the claimed invention that instead of the portable terminal, a network provides the LTE network or the HSPA+ network that offers a higher data rate to the portable terminal by comparing a data rate available in a current bandwidth allocated by the LTE network with a data rate supported by the HSPA+ network.

As is apparent to a person of ordinary skill in the art from the above description, the apparatus and method for flexibly providing a packet service to a portable terminal according to the present invention can maintain throughput at a predetermined level by distributing resources between LTE and HSPA+ on the part of a user. On the part of a network, the present invention enables flexible use of a legacy HSPA+ system, without additional investment of LTE devices.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the present invention has been particularly shown and described with reference to embodiments thereof, it will be understood by those of ordinary skill in the art that various changes in form and details may be made therein without departing from the spirit and scope of the present invention as defined by the following claims. For example, while FIG. 1 and the discussion in the specification refers to the first communication network being LTE and the second communication network being HSPA+, this arrangement is preferred and provided for illustrative purposes and other networks can be used with the claimed invention.

## Claims

1. An apparatus for providing a packet service in a portable terminal, the apparatus comprising:
a first communication network unit (170) for providing a packet service through a first communication network (175);
a second communication network unit (180) for providing a circuit service for a call service set as a default service and the packet service through a second communication network (185); and
a controller (110) for controlling the packet service to be provided through the second communication network (185) while the packet service is in progress through the first communication network, when a data rate of a bandwidth allocated by the first communication network is lower than a maximum data rate supported by the second communication network.

2. The apparatus of claim 1, wherein the first communication network (175) comprises a Long Term Evolution (LTE) network and the second communication network comprises a High Speed Packet Access+ (HSPA+) network (185).

3. The apparatus of claim 1, wherein when the controller (110) determines the data rate of the bandwidth allocated by the first communication network is lower than the maximum data rate supported by the second communication network, the controller (110) measures a data rate of a bandwidth allocated by the first communication network for a first predetermined measurement time, and when the data rate of the bandwidth allocated by the first communication network is lower than the maximum data rate supported by the second communication network for the first predetermined measurement time, the controller (110) switches operation of the packet service to the second communication network (180) and controls the packet service to be performed through the second communication network (180).

4. The apparatus of claim 3, wherein the controller (110) switches back to the first communication network (175) in order to measure a data rate of a bandwidth allocated by the first communication network while the packet service is in progress through the second communication network at a predetermined period of time subsequent to the controller (110) initially switching operation of the packet service to the second communication network , and when the controller (110) determines that the data rate of the bandwidth allocated by the first communication network (175) is lower than the maximum data rate supported by the second communication network (185) via the second communication network unit (180), the controller switches back to the second communication network (185) and controls completing the packet service to be performed through the second communication network (180).

5. The apparatus of claim 4, wherein when the controller (110) switches to the first communication network at the predetermined period of time subsequent to switching operation of the packet service to the second communication network while the packet service is in progress through the second communication network, the controller measures the data rate of the bandwidth allocated by the first communication network for a second predetermined measurement time when the data rate of the bandwidth allocated by the first communication network is lower than the maximum data rate supported by the second communication network, and switches to the second communication network and controls completion of the packet service to be performed through the second communication network, when the data rate of the bandwidth allocated by the first communication network is lower than the maximum data rate supported by the second communication network for the second predetermined measurement time.

6. The apparatus of claim 4, wherein when the data rate of the bandwidth allocated by the first communication network (175) is higher than the maximum data rate supported by the second communication network (185), the controller (110) controls the packet service to be performed through the first communication network (170).

7. The apparatus of claim 4, wherein the controller (110) increases the predetermined of time after which the controller switches to the first communication network (170) by a predetermined value, each time the controller switches from the second communication network to the first communication network.

8. A method for providing a packet service in a portable terminal, the method comprising:
measuring a data rate of a bandwidth allocated by a first communication network (175) via a first communication network unit (170) while the packet service is in progress through the first communication network; and
providing the packet service through a second communication network (185) that provides a circuit service for a call service set as a default service, when the data rate of the bandwidth allocated by the first communication network (175) is lower than a maximum data rate supported by the second communication network (185) via a second communication network unit (180).

9. The method of claim 8, wherein the first communication network comprises a Long Term Evolution (LTE) network and the second communication network comprises a High Speed Packet Access+ (HSPA+) network.

10. The method of claim 8, wherein the providing of the packet service through the second communication network comprises:
measuring a data rate of a bandwidth allocated by the first communication network for a first predetermined measurement time when the data rate of the bandwidth allocated by the first communication network is lower than the maximum data rate supported by the second communication network; and
switching operation of the packet service to the second communication network and performing the packet service through the second communication network, when the data rate of the bandwidth allocated by the first communication network is lower than the maximum data rate supported by the second communication network for the first predetermined measurement time.

11. The method of claim 10, further comprising:
switching by the controller to the first communication network at a predetermined period of time subsequent to switching the operation to the second communication network and measuring a data rate of a bandwidth allocated by the first communication network while the packet service is in progress through the second communication network; and
switching back by the controller to the second communication network and to complete performing the packet service through the second communication network, when the data rate of the bandwidth allocated by the first communication network is lower than the maximum data rate supported by the second communication network.

12. The method of claim 11, wherein the providing of the packet service through the second communication network comprises:
measuring the data rate of the bandwidth allocated by the first communication network for a second predetermined measurement time when the data rate of the bandwidth allocated by the first communication network is lower than the maximum data rate supported by the second communication network; and
switching to the second communication network and completing performance the packet service through the second communication network, when the data rate of the bandwidth allocated by the first communication network is lower than the maximum data rate supported by the second communication network for the second predetermined measurement time.

13. The method of claim 11, further comprising, when the data rate of the bandwidth allocated by the first communication network is higher than the maximum data rate supported by the second communication network, performing the packet service through the first communication network.

14. The method of claim 11, wherein the predetermined period of time subsequent to the controller being switched back from the second communication network to the first communication network is increased by a predetermined value, each time the controller switches the second communication network to the first communication network.
